Europäisches Patentamt

(19) European Patent Office

Office européen des brevets

(11) Publication number: **0 235 071**

**B1**

(12) **EUROPEAN PATENT SPECIFICATION**

(45) Date of publication of patent specification: **23.05.90**

(21) Application number: **87630004.7**

(22) Date of filing: **08.01.87**

(51) Int. Cl.⁵: **B 29 D 30/08**

(54) Method and apparatus for assembling a vehicle tyre.

(30) Priority: **09.01.86 GB 8600452**

(43) Date of publication of application:
**02.09.87 Bulletin 87/36**

(45) Publication of the grant of the patent:
**23.05.90 Bulletin 90/21**

(84) Designated Contracting States:
**BE DE ES FR GB IT LU NL**

(56) References cited:
**GB-A-2 133 357**
**GB-A-2 134 439**

(73) Proprietor: **Apsley Metals Limited**
**York Street**
**Wigan Lancashire WN4 4BS (GB)**

(72) Inventor: **Holroyd, Eric**
**10 Arley End High Legh Park**
**Knutsford Cheshire (GB)**
Inventor: **McGlashen, James Neil**
**23 Mendip Avenue Winstanley**
**Nr. Wigan Lancashire (GB)**
Inventor: **Pointon, Ronald Harry**
**24 Cambridge Road**
**Formby Merseyside (GB)**

(74) Representative: **Weyland, J.J. Pierre**
**Goodyear Technical Center-Luxembourg**
**L-7750 Colmar-Berg (LU)**

Courier Press, Leamington Spa, England.

## Description

This invention relates to a method and apparatus for assembling a vehicle tyre according the preamble of claim 1 and 5 respectively. GB—A—2 133 357 describes such a method and apparatus. Conventional tyre manufacturing processes assemble a plain i.e. completely unpatterned, tyre, known as a green tyre (because it is unvulcanised), and then place it in a mould of a curing press to finally shape the tyre and impress the tyre tread and sidewall patterns upon the green carcass. The tyre is retained in the closed press and heated to effect vulcanisation. It is important that the final appearance of the tyre and particularly its sidewalls is good.

Difficulties occur in forming the tyre sidewalls in conventional shaping and curing processes due to the appreciable stretch of the radially outer edge of the extruded straight length of sidewall material which is assembled to a "flat-build" (in cylindrical form) tyre carcass, the carcass then being shaped into a toroid. The shaping makes it particularly difficult to maintain the desired sidewall cross-sectional profile especially when the pre-extruded length of the sidewall already includes variations in cross-section due to the extrusion process by which it is typically manufactured.

The sidewall appearance of tyres greatly affects the saleability of the product. Blemishes in the sidewall and, especially in the case of white sidewalls or white-lettered tyres, any displacement of the components of the moulded pattern must be avoided.

In an attempt to overcome these problems it has been proposed to cast or to injection mould tyres, or inject the sidewalls onto a carcass in a fully shaped toroidal mould. However such systems invariably require complex support for the tyre carcass reinforcement, or indeed the designing of a tyre without a conventional carcass reinforcement.

It is an object of the present invention to provide a method and apparatus for manufacturing a tyre which improves the sidewall moulding with respect to final appearance of sidewall sectional shape.

Accordingly there is provided a method of manufacture of a pneumatic tyre including the steps of, forming a tread mould and assembling thereto a shaped tyre carcass, forming a pair of uncured rubber sidewalls each in discrete annular sidewall moulds and bringing the sidewall moulds filled with compound to press the sidewalls into engagement with the shaped carcass, characterised in that prior to engagement of the sidewalls with the shaped carcass each sidewall mould is brought into sealing engagement with a tyre curing mould which incorporates said tread mould, air is then removed from the space between the sidewall and carcass assembly, and said sidewalls are then moved into engagement with the carcass assembly.

Preferably the tyre curing moulds includes said tread mould and a pair of ring-shaped bead portion moulds, which are held in contact with the respective bead regions of the tyre carcass, and each sidewall mould is in sealing engagement with both the tread mould and the respective bead portion mould, prior to the removal of air from between the sidewall and the carcass.

Each sidewall mould may be filled with uncured sidewall compound by transfer moulding, by winding a strip of said compound into the mould or by laying a single strip of approximately the cross-section of the sidewall in a single turn into the mould. The sidewall compound once in the sidewall mould may be consolidated therein by pressing a mould closure plate onto the uncured sidewall compound.

Preferably the sidewall mould when moved so as to press the respective sidewall to the carcass will then form part of the tyre curing mould.

According to a second aspect of this invention there is provided an apparatus for assembly of a green tyre comprising a tyre curing mould including a tread mould, a pair of discrete sidewall moulds which are separable from the tread mould, means for filing the sidewall moulds with sidewall compound to form an uncured sidewall, and means for bringing the sidewall mould with compound therein into engagement with a shaped tyre carcass and tread contained within the tread mould, characterised in that the sidewall moulds are each sealingly engageable with the tyre curing mould when the sidewall is spaced from the carcass, and there is provided a means for removing air from the space between the carcass and the sidewalls prior to placement of the sidewalls against the carcass.

Preferably the tyre curing mould includes two ring-shaped bead portion moulds, the sidewall moulds each having means for sealing engagement with the tread mould and the respective bead portion mould.

Preferably the means for filling the sidewall mould with compound comprises a feed device for a strip of uncured compound and means to relatively rotate the feed device and the sidewall mould being filled such that a winding may be laid in the cavity. Alternatively the filling means may be an injection transfer moulding device.

The sidewall mould preferably includes means to assist in retaining the compound in the cavity. Suitable means include open passages through the mould or spews which are shaped as retention rings at the edges of the sidewall.

The invention will now be described by way of example and with reference to the accompanying drawings in which:-

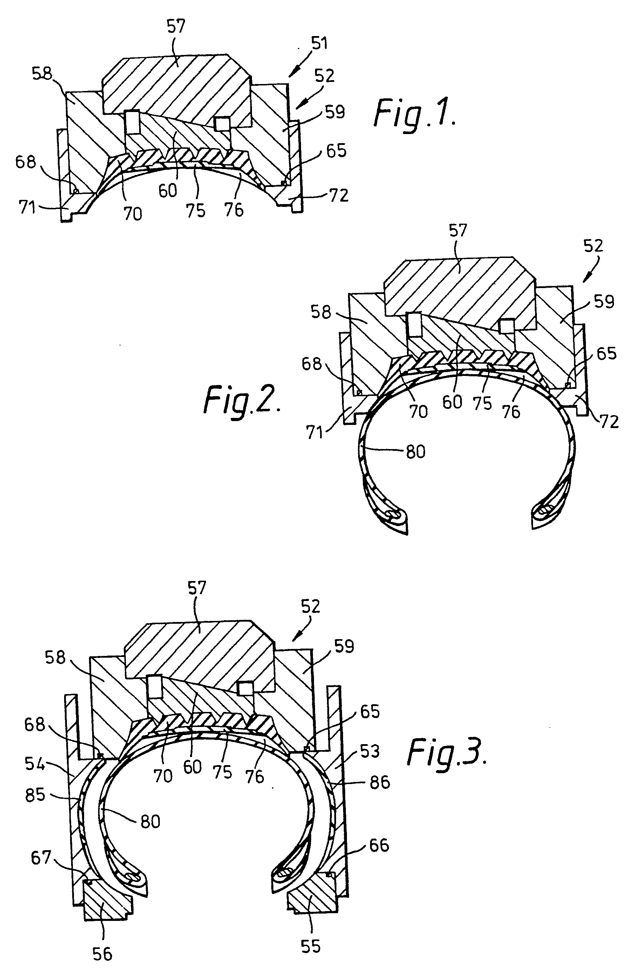

Figures 1 to 6 each show a radial cross-section through a tyre mould at various stages through the tyre assembly process.

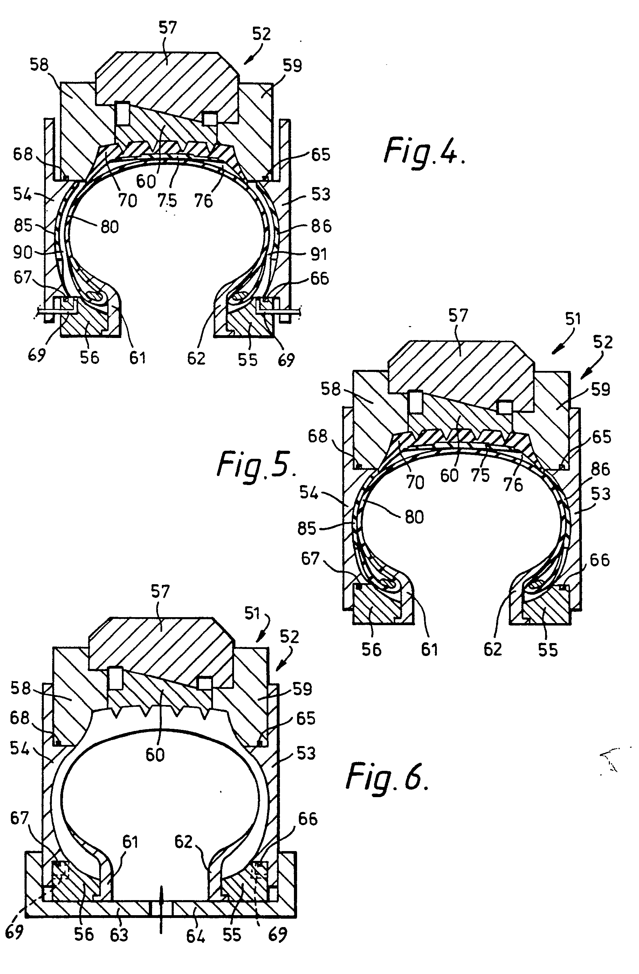

With reference to Figure 6, the apparatus for assembling a tyre is shown in an assembled state and comprises a tyre curing mould 51 including a ring-shaped tread mould 52, two sidewall moulds 53, 54 and two ring-shaped bead portion moulds 55, 56, with a plurality of clips 61, 62 for connecting each bead portion mould 55 or 56 to the tyre carcass. The ring-shaped tread mould 52 itself comprises a plurality of separable parts 57, 58, 59, 60 including a ring of tread moulding segments 60. In addittion the tread moulding ring 52, the sidewall moulds 53, 54 and the bead region moulds 55, 56, the apparatus further comprises rings 63, 64 which support the clips 61, 62, the bead portion moulds 55, 56, and the sidewall moulds 53, 54. Air-tight seals are provided between most of the mating surfaces, especially seals 65 and 68 between axially extending surfaces on the two sidewall moulds 53 and 54 respectively and the tread mould, and seals 66 and 67 between axially extending surfaces on the sidewall moulds 53, and 54, and the respective bead portion moulds 55, and 56, as can be seen in the drawings.

Air passageways 69 are located in the bead portion mould for the removal of air from within the tyre curing mould. To build a tyre, a layer of unvulcanised tread rubber compound 70 is placed within the ring-shaped tread mould 52 as shown in Figure 1. The tread mould 52 is held together by means of two additidnal side rings 71, 72. A layer of untread rubber compound (if required) (not shown in the drawings) and one or more breaker plies 75 as required, and a layer of under ply rubber 76, is then positioned inwardly of the tread rubber compound.

A tyre carcass 80 is built at a separate tyre building station in conventional manner by laying various plies etc. on a drum, (not shown) moving the drum to a position radially within the tread mould and shaping the carcass from a cylindrical form to a toroidal form to bring the crown region of the carcass into engagement with the radially inner surface of the under tread rubber. This is shown in Figure 2.

The two sidewall moulds 53, 54 are then each filled with sidewall rubber compound, the sidewalls 85, 86 being formed into the shape they will have in the completed tyre. The sidewall moulds may be filled by various alternative means e.g. strip winding or transfer moulding as described in more detail in U.K. Published Application No. 2134439A.

The sidewall moulds 53, 54 are then placed in position adjacent the tread mould 52 as shown in Figure 3. The side rings 71, 72 illustrated in Figures 1 and 2 having been removed and the sidewall moulds are sealingly engaged with the tread mould 52. The bead portion moulding rings 55, 56 may also each be assembled with the respective sidewall moulds 53, 54. This stage is illustrated in Figure 3 of the accompanying drawings.

The bead portion moulding rings 55, 56 are then moved axially inwards to contact the outer surfaces of the bead regions of the tyre carcass 80 and clipped thereto by means of the clips 61, 62. As can be seen in Figure 4, there are sealed spaces 90, 91 defined between the axially inner surfaces of the sidewalls 85, 86, in the sidewall moulds, the axially outer surfaces of the tyre carcass 80, the radially inner surface of the tread moulding ring 52, and the radially outer surfaces of the two bead portion moulding rings 55, 56. Each space 90 or 91 is sealed by the seals 67, 68 and 65, 66 respectively. Air from each space 90 or 91 is then removed by connecting a vacuum pump to passageways 75 in the bead portion moulds 55, 56. This is shown in Figure 4. Means may be provided in each of the sidewall moulds 53, 54 to prevent the sidewall rubber from moving whilst the spaces 90, 91 are being evacuated. These means are preferably small channels at the radially inner and outer edges of the sidewall moulds, into which rubber compound can flow. When the air has been removed from the spaces 90, 91 between the tyre sidewalls and the respective sides of the carcass 80, the sidewall moulds 53, 54 are moved axially inwards. This causes the sidewall moulds to cut off the spaces 90 and 91 from the passageways 75 connected to the vacuum pump. The sidewalls 85, 86 are pressed into contact with the sides of the tyre carcass as shown in Figure 5.

The complete tyre is thus assembled and it will be noticed that the sidewalls 85, 86 once they are formed in the respective sidewall moulds 54 and 53 are not further shaped or distorted in any way during the subsequent process steps. This, together with the fact that the air is removed from between the sidewall rubber and the sides of the carcass, means that the number of blemishes appearing on a tyre sidewall is substantially reduced.

To complete the curing mould the rings 63, 64 are added to the bead portion moulds 55, 56 as shown in Figure 6 and an annular curing bag (not shown) is placed inside the tyre. This is pressurised with hot fluid and the mould heated to effect vulcanisation of the tyre. The mould is then opened and the tyre removed. Various parts of the apparatus e.g. means for moving the tyre sidewall moulds and bead portion moulds from the positions shown in Figure 3 to those shown in Figures 4 and 5 are not disclosed in detail since any suitable means well known to men skilled in the tyre manufacturing art can be utilised.

The removal of air from the spaces 90 and 91 during the tyre assembly process is particularly advantageous in the manufacture of large size tyres such as Earthmover tyres.

**Claims**

1. A method of manufacture of a pneumatic tyre including the steps of, forming a tread (70) in a tread mould (52) and assembling thereto a shaped tyre carcass (80), forming a pair of uncured rubber sidewalls (85) (86) each in discrete annular sidewall moulds (53) (54) and locating the sidewall moulds (53) (54) with sidewalls insitu to press the sidewalls (85) (86) into engagement with the shaped carcass (80), characterised in that prior to engagement of the sidewalls (85) (86) with the shaped carcass (80), each sidewall mould (53) (54) is brought into sealing engagement with a tyre curing mould (51) which incorporates said tread mould (52), each sidewall mould (53) (54) is retained in sealing engagement with the tyre curing mould (51) and the sidewalls (85) (86) held in spaced relationship with the carcass (80), air is pumped from the spaces (90) (91) between each sidewall (85) (86) and carcass assembly (80), and each sidewall mould (53) (54) is moved axially inwards to place the sidewalls into engagement with the carcass assembly.

2. A method as claimed in Claim 1, characterised in that the tyre curing mould (51) futher includes a pair of ring shaped bead portion moulds (55) (56) which are held in contact with the respective bead portions of the tyre carcass (80), and each sidewall mould (53) (54) is in sealing engagement with both the tread mould (52) and the respective bead portion mould (55) and (56) prior to the removal of air from the spaces (90) (91) between the sidewalls and the carcass.

3. A method as claimed in Claim 1 or Claim 2, characterised in that, each sidewall mould (53) and (54) when moved so as to press the repective sidewall (85) (86) to the carcass will then form part of the tyre curing moulds (51).

4. A method as claimed in any one of the preceding claims characterised in that the inwards movement of the sidewall moulds (53) (54) cuts off the source of vacuum to the spaces (90) (91) between the sidewalls and the carcass assembly.

5. Apparatus for assembly of a green tyre comprising a tyre curing mould (51) including a tread mould (52), a pair of discrete sidewall moulds (53) (54) which are separable from the tread mould, means for filling the sidewall moulds with sidewall compound to form an uncured sidewall (85) (86), and means for bringing the sidewall moulds with compound therein into engagement with a shaped tyre carcass (80) and tread (70) contained within the tread mould (52), characterised in that the sidewall moulds (53) are each sealingly engageable with the remainder of the tyre curing mould (52) (55) (56) by means of axially extending sealing surfaces thereon so that a respective sidewall (85) (86) formed therein can be held spaced from the tyre carcass whilst the sidewall mould is sealingly engaged with the tyre mould, and there is a means (69) for removing air from the space (90) (91) between the carcass (80) and the sidewalls (85) (86) prior to placement of the sidewalls against the carcass.

6. Apparatus as claimed in Claim 5 characterised in that the tyre curing mould (51) also includes a pair of bead portion moulds (55) (56) and means for moving the bead portion moulds into engagement with the repective bead portions of the carcass, and said sidewall moulds (53) (54), are each sealingly engageable with both the tread mould (52) and a respective bead portion mould (55) and (56).

7. Apparatus as claimed in Claim 6 wherein passageways (69) for the removal of air are located in each bead portion mould (55) and (56).

8. Apparatus as claimed in Claim 7 characterised in that the passageways (69) open into the axially etending surfaces of the bead portion moulds so that the passageways (69) are shut off by the axially extending surfaces on the sidewall moulds (53) (54), when the sidewalls (85) (86) are moved into engagement with the carcass (80).

9. Apparatus as claimed in any one of claims 5 to 8 characterised in that the sidewall moulds (53) (54) have means to prevent the sidewalls from moving whilst air is evacuated from the spaces (90) (91) between the sidewalls and the carcass assembly.

**Patentansprüche**

1. Verfahren zum Herstellen eines Luftreifens mit folgenden Schritten:

Ausbilden einer Lauffläche (70) in einer Laufflächenform (52) und Aufbauen einer geformten Reifenkarkasse (80) hierauf, Ausbilden zweier unvulkanisierter Kautschukseitenwände (85) (86) jeweils in getrennten ringförmigen Seitenwandformen (53) (54) und Anordnen der Seitenwandformen (53) (54) mit den Seitenwänden in situ, um die Seitenwände (85) (86) in Eingriff mit der geformten Karkasse (80) zu pressen, dadurch gekennzeichnet, daß vor dem Eingriff der Seiterwände (85) (86) mit der geformten Karkasse (80) jede Seitenwandform (53) (54) in abdichtenden Eingriff mit einer Reifenvulkanisierform (51) gebracht wird, welche die Laufflächenform (52) enthält, daß jede Seitenwandform (53) (54) in abdichtendem Eingriff mit der Reifenvulkanisierform (51) gehalten wird und die Seitenwände (85) (86) in Abstand von der Karkasse (80) gehalten werden, daß Luft aus den Zwischenräumen (90) (91) zwischen jeder Seitenwand (85) (86) und dem Karkassenaufbau (80) gepumpt wird und jede Seitenwandform (53) (54) axial nach innen bewegt wird, um die Seitenwände in Eingriff mit dem Karkassenaufbau zu bringen.

2. Verfahren nach Anspruch 1, dadurch gekennzeichnet, daß die Reifenvulkanisierform (51) weiterhin zwei ringförmige Wulstabschnittformen (55) (56) umfaßt, die in Berührung mit den betreffenden Wulstabschnitten der Reifenkarkasse (80) gehalten werden, und jede Seitenwandform (53) (54) in abdichtendem Eingriff mit sowohl der Laufflächenform (52) als auch der betreffenden Wulstabschnittform (55) und (56) vor dem Abziehen von Luft aus den Zwischenräumen (90) (91) zwischen den Seitenwänden und der Karkasse steht.

3. Verfahren nach Anspruch 1 oder 2, dadurch gekennzeichnet, daß jede Seitenwandform (53) und (54) einen Teil der Reifenvulkanisierformen (51) bildet, sobald jede Seitenwandform (53) und (54) so bewegt wird, daß sie die betreffende Seitenwand (85) (86) an die Karkasse drückt.

4. Verfahren nach einem der vorhergehenden Ansprüche, dadurch gekennzeichnet, daß die Einwärtsbewegung der Seitenwandformen (53) (54) die Unterdruckquelle zu den Zwischenräumen (90) (91) zwischen den Seitenwänden und dem Karkassenaufbau abtrennt.

5. Vorrichtung zum Aufbauen eines grünen Reifens mit einer Reifenvulkanisierform (51), die eine Laufflächenform (52) umfaßt, mit zwei gesonderten Seitenwandformen (53) (54), die von der Laufflächenform trennbar sind, mit einer Einrichtung zum Füllen der Seitenwandformen mit einer Seitenwandzusammensetzung zur Ausbildung einer nicht vulkanisierten Seitenwand (85) (86), und mit einer Einrichtung, um die Seitenwandformen mit der Zusammensetzung darin in Eingriff mit einer geformten Reifenkarkasse (80) und der Lauffläche (70), die in der Laufflächenform (52) enthalten ist, zu bringen, dadurch gekennzeichnet, daß die Seitenwandformen (53) jeweils mittels axial sich erstreckender Abdichtflächen mit der restlichen Reifenvulkanisierform (52) (55) (56) so in abdichtenden Eingriff bringbar sind, daß eine jeweils darin ausgebildete Seitenwand (85) (86) in Abstand von der Reifenkarkasse gehalten werden kann, während die Seitenwandform in abdichtendem Eingriff mit der Reifenform steht, und daß eine Einrichtung (69) zum Abziehen von Luft aus dem Zwischenraum (90) (91) zwischen der Karkasse (80) und den Seitenwänden (85) (86) vor dem Anbringen der Seitenwände an der Karkasse vorgesehen ist.

6. Vorrichtung nach Anspruch 5, dadurch gekennzeichnet, daß die Reifenvulkanisierform (51) ebenfalls zwei Wulstabschnittformen (55) (56) und eine Einrichtung zum Bewegen der Wulstabschnittformen in Eingriff mit den betreffenden Wulstabschnitten der Karkasse umfaßt, und jede Seitenwandform (53) (54) sowohl mit der Laufflächenform (52) als auch einer zugeordneten Wulstabschnittform (55) und (56) abdichtend in Eingriff bringbar ist.

7. Vorrichtung nach Anspruch 6, bei der Durchlässe (69) zum Abziehen der Luft in jeder Wulstabschnittform (55) und (56) angeordnet sind.

8. Vorrichtung nach Anspruch 7, dadurch gekennzeichnet, daß die Durchlässe (69) in die sich axial erstreckenden Flächen der Wulstabschnittformen münden, so daß die Durchlässe (69) durch die sich axial erstreckenden Flächen an den Seitenwandformen (53) (54) unterbrochen werden, wenn die Seitenwände (85) (86) in Eingriff mit der Karkasse (80) gebracht werden.

9. Vorrichtung nach einem der Ansprüche 5 bis 8, dadurch gekennzeichnet, daß die Seitenwandformen (53) (54) eine Einrichtung aufweisen, um eine Bewegung der Seitenwände zu verhindern, während Luft aus den Zwischenräumen (90) (91) zwischen den Seitenwänden und dem Karkassenaufbau abgezogen wird.

**Revendications**

1. Procédé de fabrication d'un bandage pneumatique, ce procédé comprenant les étapes consistant à: façonner une bande de roulement (70) dans un moule (52) qui lui est destiné et y assembler une carcasse (80) configurée pour bandage pneumatique; faconner une paire de flancs (85) (86) en caoutchouc non vulcanisé, chacun dans des moules (53) (54) annulaires discrets pour flancs et disposer les moules (53) (54) pour flancs munis de ces derniers in situ, en vue de presser les flancs (85) (86) en contact avec la carcasse façonnée (80), caractérisé en ce qu'avant d'amener les flancs (85, 86) en contact avec la carcasse (80) façonnée, on amène chaque moule (53) (54) pour flancs en contact d'étanchement avec un moule (51) destiné à la vulcanisation d'un bandage pneumatique, ce moule englobant le moule (52) pour bande de roulement, on maintient chaque moule (53) (54) pour flancs en contact d'étanchement avec le moule (51) destiné à la vulcanisation du bandage pneumatique et on maintient les flancs (85) (86) en relation espacée avec la carcasse (80), tandis que l'on pompe l'air régnant dans les espaces (90) (91) ménagés entre chaque flanc (85) (86) et l'assemblage de carcasse (80), et on déplace chaque moule (53) (54) pour flanc axialement vers l'intérieur en vue de mettre les flancs en contact avec l'assemblage de carcasse.

2. Procédé selon la revendication 1, caractérisé en ce que le moule (51) destiné à la vulcanisation du bandage pneumatique comprend en outre, une paire de moules (55) (56) annulaires pour talons, ceux-ci étant maintenus en contact avec les talons respectifs de la carcasse (80) de bandage pneumatique, tandis que chaque moule (53) (54) pour flancs se trouve en contact d'étanchement avec à la fois, le moule pour bande de roulement (52) et les moules (55) et (56) pour talons respectifs, avant d'éliminer l'air régnant dans les espaces (90) (91) ménagés entre les flancs et la carcasse.

3. Procédé selon la revendication 1 ou 2, caractérisé en ce que chaque moule (53) et (54) pour flancs, lorsqu'on les déplace de façon à presser les flancs respectifs (85) (86) contre la carcasse, fera alors partie intégrante des moules (51) destinés à la vulcanisation du bandage pneumatique.

4. Procédé selon l'une quelconque des revendications précédentes, caractérisé en ce que le mouvement vers l'intérieur des moules (53) (54) pour flancs coupe la source de vide fournie aux espaces (90) (91) ménagés entre les flancs et l'assemblage de carcasse.

5. Appareil destiné à l'assemblage d'un bandage pneumatique "cru", cet appareil comprenant un moule (51) destiné à la vulcanisation d'un bandage pneumatique, ce moule englobant un moule (52) pour bande de roulement, une paire de moules (53) (54) annulaires discrets pour flancs, ces moules pouvant être séparés du moule pour bande de roulement, des moyens destinés à remplir les moules pour flancs avec le composé qui leur est destiné, en vue d'obtenir un flanc (85) (86) non vulcanisé, ainsi que des moyens en vue d'amener les moules pour flancs munis du composé en contact avec une carcasse (80) façonnée pour bandage pneumatique et une bande de roulement (70) insérée au sein du moule (52) qui lui est destinére, caractérisé en ce que les moules (53) pour flancs peuvent chacun venir se mettre en contact d'étanchement avec le reste des moules (52) (55) (56) destinés à la vulcanisation du bandage pneumatique, via des surfaces d'étanchement s'étendant axialement sur ceux-ci de telle sorte qu'un flanc (85) (86) respectif qui y est façonné peut être maintenu écarté de la carcasse pour bandage pneumatique, tandis que l'on met en contact d'étanchement le moule pour flanc avec le moule pour bandage pneumatique, et en ce que l'on prévoit un moyen (69) destiné à éliminer l'air régnant dans les espaces (90) (91) ménagés entre la carcasse (80) et les flancs (85) (86) avant de disposer les flancs contre la carcasse.

6. Appareil selon la revendication 5 caractérisé en ce que le moule destiné à la vulcanisation de bandage pneumatique comprend également une paire de moules (55) (56) pour talons, ainsi qu'un moyen destiné à déplacer les moules pour talons en vue de les mettre en contact avec les talons respectifs de la carcasse, tandis que les moules (53) (54) pour flancs peuvent venir chacun se mettre en contact d'étanchement avec à la fois le moule (52) pour bande de roulement et un moule (55) et (56) respectif pour talons.

7. Appareil selon la revendication 6, dans lequel on ménage des passages (69) destinés à l'élimination de l'air, dans chaque moule (55) et (56) pour talon.

8. Appareil selon la revendication 7 caractérisé en ce que les passages (69) s'ouvrent dans les surfaces s'étendant axialement des moules pour talons, de telle sorte que les passages (69) se trouvent fermés par les surfaces s'étendant axialement sur les moules (53) (54) pour flancs, lorsque l'on déplace les flancs (85) (86) pour qu'ils viennent se mettre en contact avec la carcasse (80).

9. Appareil selon l'une quelconque des revendications 5 à 8, caractérisé en ce que les moules (53) (54) pour flancs sont munis d'un moyen destiné à empêcher les flancs de se déplacer tandis que l'on évacue l'air régnant dans les espaces (90) (91) ménagés entre les flancs et l'assemblage de carcasse.

Fig.1.

Fig.2.

Fig.3.

Fig.4.

Fig.5.

Fig.6.

2